# EUROPÄISCHE PATENTSCHRIFT

(11) **EP 1 502 528 B1**
(45) Veröffentlichungstag und Bekanntmachung des Hinweises auf die Patenterteilung: **28.05.2008**
(21) Anmeldenummer: 04017231.4
(22) Anmeldetag: 21.07.2004
(51) Int. Cl.: A47J 31/40, A47J 31/06

(54) **Kaffeebrühvorrichtung mit Filterwechselkassette**
Coffee brewing apparatus with exchangeable filter cassette
Machine à café avec cassette de filtre échangeable

(30) Priorität: 29.07.2003 DE 10334543
(43) Veröffentlichungstag der Anmeldung: 02.02.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 0 870 457
- WO-A-03/056987
- DE-C- 19 804 444
- FR-A- 2 245 318
- US-A1- 2002 022 070
- US-A1- 2003 116 029

## Beschreibung

Die vorliegende Erfindung betrifft eine Kaffeebrühvorrichtung mit einer Brühkammer, bestehend aus einem oberen und einem unteren Teil, die zwischen einer Öffnungsstellung und einer geschlossenen Brühstellung relativ zueinander bewegbar ausgestaltet sind, zumindest einem in das untere Teil der Brühkammer eingelegten, mit gemahlenem Kaffee gefüllten, Filterkissen (Filterpad) und einem vom unteren Teil der Brühkammer umfassten Filterträger, wobei der Filterträger als Wechselkassette ausgestaltet ist, die quer zur Brühkammerachse zwischen einer Einlegestellung zum Einlegen oder Entfernen mindestens eines Filterpads und einer Einschubstellung bewegbar ausgestaltet ist, und sowohl eine erste Aufnahme für eine erste Anzahl von Filterpads als auch eine zweite Aufnahme für eine zweite Anzahl von Filterpads aufweist.

Eine Kaffeebrühvorrichtung ist aus der EP 904718 A1 bekannt. Bei dem dort beschriebenem Gerät handelt es sich um eine Niederdruckkaffeemaschine. Bei den Niederdruckkaffeemaschinen wird in aller Regel mit einem Brühdruck von 1,2 bis 2,0 bar, bevorzugt 1,5 bis 1,8 bar, gearbeitet. Bei dem bekannten Gerät fasst der untere Teil der Brühkammer einen Filterträger, in den ein Filterpad eingelegt wird. Der obere Teil der Brühkammer ist an einem Schwenkdeckel befestigt und wird in der geschlossenen Stellung durch Verrasten des Schwenkdeckels auf den Filterträger gedrückt, so dass das Filterpad vollständig in der Brühkammer aufgenommen ist. Heißes Wasser wird von oben in das obere Teil eingeleitet, benetzt und durchdringt das Kaffeepad. Solche Portionskaffeebrühvorrichtungen für den Haushaltsgebrauch setzen sich immer mehr durch und haben sich im Großen und Ganzen recht gut bewährt. Dennoch ist man bestrebt, die Anwendungsmöglichkeiten solcher Brühvorrichtungen weiter zu verbessern.

Eine automatische Vorrichtung zum Zubereiten von Heißgetränken aus Kapseln mit Getränkeextrakt ist aus der WO 03/056987 A1 bekannt.

Es ist daher die Aufgabe der vorliegenden Erfindung, eine Kaffeebrühvorrichtung der eingangs genannten Art hinsichtlich ihrer Einsatzmöglichkeit zu erweitern.

Hierzu ist vorgesehen, dass der Filterträger als Wendewechselkassette ausgestaltet ist, wobei die erste Aufnahme an der Oberseite und die zweite Aufnahme an der Unterseite des Filterträgers angeordnet ist. Der Filterträger wird demnach durch einfaches Wenden von der einen Stellung in die andere überführt. Die Wendewechselkassette bietet demnach zwei Positioniermöglichkeiten, in denen jeweils eine der beiden Aufnahmen, nach Wahl des Benutzers, Bestandteil der Brühkammer ist.

Zwar ist aus der US 3620155 bereits ein Filterträger bekannt, der seitlich eingeschoben werden kann, jedoch weist diese Kaffeezubereitungsvorrichtung keine geschlossene Brühkammer auf, sondern von oben wird lediglich ein flächiger Niederhalter heruntergefahren, der die Benetzung des Filterpads mit heißem Wasser begünstigt. Des Weiteren bietet dieser Filter auch nicht zwei Aufnahmen für die Bereitstellung unterschiedlicher Portionierungsvorgänge. Der wesentliche Vorteil der vorliegenden Erfindung besteht darin, dass ein und derselbe Filterträger in der einen Stellung mit einer ersten Anzahl von Filterpads zusammenwirkt und in der anderen Stellung mit einer zweiten Anzahl von Filterpads Kaffee herstellen kann. In einer einfachen Ausführungsform wird es sich bei der ersten Anzahl um ein einziges Filterpad und in der zweiten Anzahl um zwei Filterpads handeln. Die Flexibilität einer solchen Kaffeebrühvorrichtung gegenüber herkömmlichen Geräten erhöht sich um 100 %, da nicht nur eine einzige Tassenportion Kaffee, sondern auch eine andere Tassenportion Kaffee mit ein und demselben Filterträger erzeugt werden kann.

Eine besonders einfache Konstruktion sieht vor, dass der Filterträger in eine zumindest einseitig offene Einschubaufnahme eines Gehäuses ein- und ausschiebbar ausgestaltet sein kann. Der Filterträger wird demnach nach Art einer Schublade in die restliche Kaffeebrühvorrichtung hinein- oder herausgeschoben. Durch die Öffnungsstellung und die Brühstellung der Brühkammer lässt sich dann auch eine geeignete Verankerung in der Brühstellung und Entriegelung in der Öffnungsstellung für den Filterträger konstruieren.

Günstigerweise können die erste und zweite Aufnahmen als topfförmige Vertiefungen ausgestaltet sein, die eine umlaufende Randstufe aufweisen und das obere Teil der Brühkammer einen stirnseitig angeordneten ringförmigen Aufdrücksteg aufweisen, der in der Brühstellung auf einen horizontalen Abschnitt der Randstufe gedrückt ist. Die topfförmige Vertiefung dient zur sicheren Aufnahme eines oder mehrerer Filterpads. Die umlaufende Randstufe kann mehrere Aufgaben erfüllen. Zum einen weisen Filterpads in aller Regel einen umlaufenden Versiegelungsrand auf, der in der Randstufe aufliegen könnte. Zum anderen dient die Randstufe als Zentrierung für den ringförmigen Aufdrücksteg, so dass hier bereits eine gewisse Abdichtung der Brühkammer erfolgt. Gleichzeitig kann das Kaffeepad durch den dazwischen liegenden Versiegelungsrand festgehalten sein.

Gemäß einer Ausführungsform weist die erste und zweite Aufnahme radial verlaufende Stege und/oder Nuten auf, die sich bis zur umlaufenden Randstufe fortsetzen und in der Brühstellung der ringförmige Aufdrücksteg auf den Randbereich des Filterpads gedrückt ist, der auf den Stegen oder Nuten der horizontalen Randstufe aufliegt. Günstigerweise könnten diese Stege oder Nuten bis zum Auslass des Filterträgers fortgeführt werden. Das Besondere dieser Ausführungsform besteht darin, dass der meist flache Randbereich (Siegelrand des Filterpads) nicht auf einer ebenen, flach ausgestalteten Stufe aufliegt, sondern auf eine profilierte Randstufe durch den Aufdrücksteg aufgedrückt wird. Eine solche Ausgestaltung ist weit weniger fehleranfällig hinsichtlich nicht korrekt eingelegter Filterpads oder Fehler bzw. Faltstellen im Randbereich desselben. Darüber hinaus sorgt die von den Stegen und/oder Nuten erzeugte Profilierung für ein Verkrallen des Randbereichs des Filterpads, bei gleichzeitiger Ausdehnungsmöglichkeit, wenn dieses befeuchtet wird. Des Weiteren besteht hierdurch die Möglichkeit, gänzlich andere Dichtungskonzepte zu verwenden, wie sie im Stand der Technik bekannt sind. Im Stand der Technik erfolgt die Abdichtung meist unter Zwischenfügung des Randbereichs des Filterpads. Bei dem vorliegenden Konzept wird absichtlich eine gewisse Leckageströmung zugelassen, so dass außen liegende Dichtungen von innen mit Druck beaufschlagt werden. Hierdurch können Lippendichtungen eingesetzt werden, die bei steigendem Druck auch eine bessere Abdichtung bewirken.

Von Vorteil ist auch eine Konstruktion, bei der der obere Teil der Brühkammer einen in die Brühkammer hineinragenden und einen Brühkammereinlassbereich umgebenden Kragen aufweist. Unter Brühkammereinlassbereich ist die Zone gemeint, in der das heiße Wasser in die Brühkammer eingeleitet wird. Der Kragen drückt je nach seiner Höhe leicht auf das Filterpad auf und verhindert, dass entlang des Oberteils heißes Wasser unmittelbar zum Außenrand der Brühkammer fließt, sondern vorher auf jeden Fall in das Filterpad eindringt. Hierdurch kommt insbesondere bei Ausführungsformen, die mit einem Aufdrücksteg und Randstufe arbeiten, nur bereits durch das Filterpad geflossenes Wasser am Randbereich an.

Am oberen Teil der Brühkammer kann eine obere Ringdichtung angeordnet sein, die auf eine obere Dichtungsfläche des Filterträgers in der Brühstellung aufgedrückt ist. Das Aufdrücken erfolgt bevorzugt außerhalb der Brühkammer, so dass eine vollständige Abdichtung mit einfachen Mitteln bewirkbar ist.

Des Weiteren kann in der Brühstellung das Einfedern der oberen Ringdichtung durch das Aufdrücken des ringförmigen Aufdrückstegs auf die umlaufende Randstufe des Filterträgers begrenzt sein. Der Aufdrücksteg wirkt demnach zusätzlich als Überlastsicherung für die Ringdichtung, da diese nur so weit zusammengedrückt werden kann, bis der Aufdrücksteg fest auf dem Filterträger sitzt. Dies sorgt für eine langlebige Dichtungsnutzung.

Auch am Boden der Einschubaufnahme kann eine untere Ringdichtung vorgesehen sein, auf die ein untere Dichtungsfläche des Filterträgers in der Brühstellung aufgedrückt ist. Dies sorgt für eine Abdichtung der Wechselkassette im unteren Bereich in der Brühstellung, so dass entstandener Kaffeeextrakt lediglich zu den dafür vorgesehenen Auslassöffnungen fließt.

In diesem Zusammenhang kann die untere Ringdichtung in einer Aussparung des Bodens der Einschubaufnahme angeordnet sein und in der Öffnungsstellung teilweise über den Boden überstehen, wobei der Filterträger in der Brühstellung mit dem Boden in Berührung steht und die untere Ringdichtung an die untere Dichtungsfläche des Filterträgers angedrückt ist. Hierdurch wird eine Überlastsicherung der unteren Ringdichtung geschaffen, da die Kassette ab einem gewissen Druck mit dem Boden der Einschubaufnahme in Berührung steht und so die Kraft auf die Ringdichtung nicht weiter erhöhen kann.

Gemäß einer Ausführungsform kann der Filterträger bei gleichzeitiger Einschub- und Brühstellung mittels an dem Filterträger und dem oberen Teil außerhalb der Brühkammer ineinander greifender Positioniermittel arretiert sein, wobei die Positioniermittel in der Öffnungsstellung außer Eingriff gebracht sind. Hierdurch wird sichergestellt, dass die Wechselkassette in der Brühstellung auch tatsächlich an der dafür vorgesehenen Position angeordnet ist und ein sicherer Brühvorgang eingeleitet werden kann.

Bevorzugt können die Positioniermittel von mindestens einem Arretierzapfen und mindestens einer Arretieröffnung gebildet sein. Wenn dann weiter der Arretierzapfen sich zu einem freien Ende hin verjüngend ausgestaltet ist, kann auch bei nicht exakt eingesetzter Wechselkassette der Arretierzapfen noch in die Arretieröffnung hineingleiten und beim Überführen von der Öffnungsstellung in die Brühstellung eine Nachzentrierung bewirken. Hierdurch können größere Toleranzen für die vom Benutzer herbeizuführende Einschubstellung gewährleistet werden.

Damit sich das Ein- und Ausschieben der Wechselkassette einfach gestaltet, ist bevorzugt gemäß einer Variante der mindestens eine Arretierzapfen am oberen Teil der Brühkammer und die mindestens eine Arretieröffnung am Filterträger angeordnet. Der Filterträger weist somit keine überstehenden, die Bewegung beeinträchtigenden Mittel auf.

Des Weiteren bezieht sich die vorliegende Erfindung auf eine Kaffeebrühvorrichtung mit einer Brühkammer, bestehend aus einem oberen und einem unteren Teil, die zwischen einer Öffnungsstellung und einer geschlossenen Brühstellung relativ zueinander bewegbar ausgestaltet sind und mit einer vom unteren Teil der Brühkammer umfassten Filterträger, der quer zur Brühkammerachse zwischen einer Einlegestellung zum Einlegen oder Entfernen eines Filterpads und einer Einschubstellung bewegbar ausgestaltet ist. Des Weiteren ist der Filterträger als Wechselkassette ausgestaltet, die sowohl eine erste Aufnahme für eine erste Anzahl von Filterpads als auch eine zweite Aufnahme für eine zweite Anzahl von Filterpads aufweist. Die diesbezüglichen Vorteilte wurden oben bereits erläutert.

Die Verwendung des Filterträgers zeichnet sich dadurch aus, dass dieser als Wendewechselkassette ausgestaltet ist, die sowohl eine erste Aufnahme für eine erste Anzahl von Filterpads als auch eine zweite Aufnahme für eine zweite Anzahl von Filterpads aufweist und zur Aufnahme in eine zumindest einseitig offene Einschubaufnahme eines Gehäuses einer Kaffeebrühvorrichtung verwendet werden kann. Insbesondere für den Haushaltsgebrauch ist diese Verwendung und Ausgestaltung sehr sinnvoll, da keine unnötigen zusätzlichen Teile verwendet werden müssen, um verschiedene Kaffeeportionen erzeugen zu können.

Im Folgenden wird eine Ausführungsform der vorliegenden Erfindung anhand einer Zeichnung näher erläutert. Es zeigen:
- Fig. 1: eine seitliche Schnittansicht der Brühvorrichtung in einer Brühstellung,
- Fig. 2: eine perspektivische Seitenansicht des oberen Teils der Brühkammer,
- Fig. 3: eine perspektivische Vorderansicht des Filterträgers aus Fig. 1,
- Fig. 4: eine Schnittansicht des Filterträgers aus Fig. 3,
- Fig. 5: eine perspektivische Draufsicht auf einen zweite Ausführungsform eines Filterträgers,
- Fig. 6: eine Schnittansicht des Filterträgers aus Fig. 5 und
- Fig. 7: einen vergrößerten Ausschnitt einer zweiten Ausführungsform einer Brühvorrichtung mit einem Filterträger gemäß der Fig. 5 und 6.

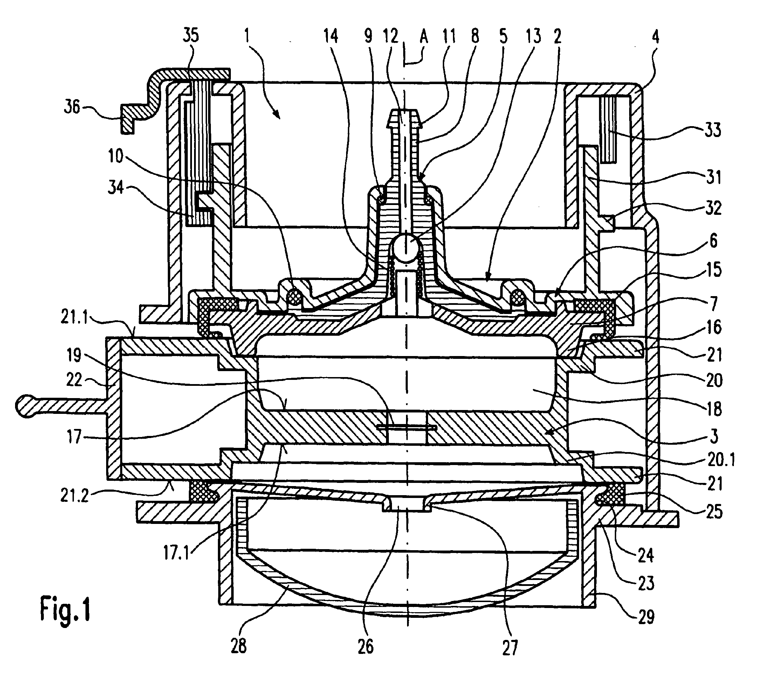

Die in Fig. 1 dargestellte Brühvorrichtung ist Bestandteil einer Niederdruckkaffeemaschine, die in hier nicht näher beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb auf diesen verwiesen wird.

Fig. 1 zeigt einen Schnitt durch eine erfindungsgemäße Brühvorrichtung 1 mit einem oberen Brühkammerteil 2 und einem als Wechselkassette ausgestalteten Filterträger 3, die in einem Gehäuse 4 angeordnet sind. Der obere Brühkammerteil 2 besteht aus einem innenliegenden Ventilteil 5, einem Abdeckteil 6 und einer Druckplatte 7. Dabei ist das Abdeckteil 6 derart ausgeformt, dass es das innenliegende Ventilteil 5 in sich aufnimmt, wobei ausschließlich ein Wasseranschluss 8 des Ventilsteils 5 aus dem Abdeckteil 6 herausragt. Zwischen dem Abdeckteil 6 und dem Ventilteil 5 sind zwei Dichtungsringe 9 und 10 angeordnet, wobei der Dichtungsring 9 am Austritt des Wasseranschlusses 8 aus dem Abdeckteil 6 platziert ist und der Dichtungsring 10, am Außenumfang des sich vom Wasseranschluss 8 seitlich erstreckenden Ventilteils 5, das Ventilteil 5 zum Abdeckteil 6 abdichtet. Am Wasseranschluss 8 ist an dem offenliegenden Ende ein umlaufender Kragen 11 vorhanden, der den Anschluss und die Befestigung einer Brühwasserleitung erleichtert. Am unteren Ende des durch den Wasseranschluss 8 führenden Einlaufkanals 12 für das Brühwasser, ist eine Ventilkugel 13 angeordnet, die sich mit einer Feder 14 gegen die Druckplatte 7 abstützt. Das Ventilteil 5 liegt mit seiner Unterseite an der Druckplatte 7 an, wobei die Feder 14 durch einen Vorsprung der Druckplatte 7 geführt wird. Das Abdeckteil 6 erstreckt sich vom seitlichen Dichtungsring 10 des Ventilteils 5 weiter nach außen und umfasst mit seiner Außenkante seitlich die als Lippendichtung ausgestaltete Ringdichtung 15, die zwischen dem Abdeckteil 6 und der Druckplatte 7 platziert ist und in axialer Richtung nach unten teilweise über die Druckplatte 7 übersteht. Die Druckplatte 7 weist einen ringförmig umlaufenden, in axialer Richtung nach unten vorstehenden Aufdrücksteg 16 auf, der als einzigster Teil über die Druckplatte 7 nach unten und über die Lippendichtung 15 übersteht.

Die Druckplatte 7 des oberen Brühkammerteils 2 bildet zusammen mit dem Filterträger 3 eine Brühkammer 18. Zum Ausbilden der Brühkammer 18 weist der Filterträger 3 eine erste als topfförmige Vertiefung ausgestaltete Aufnahme 17 auf, in deren Mitte sich der Brühkammerauslass in Form einer Düsenplatte 19 befindet. Im Seitenbereich weist die erste Aufnahme eine umlaufende Randstufe 20 auf, auf den der Aufdrücksteg 16 der Druckplatte 7 aufdrückt. An diese Randstufe 20 schließt sich in Form eines weiteren Absatzes die obere Filterträgerwand 21 an, die auf ihrer Oberseite die obere Dichtungsfläche 21.1, auf die der Dichtungsring 10 in der Brühstellung aufdrückt, bereitstellt. Der Filterträger 3 weist an einer Seite einen Griff 22 auf, mit dem der Filterträger 3 in der Öffnungsstellung aus der Brühvorrichtung 1 herausgezogen werden kann. Dazu weist das Gehäuse 4 an der Seite des Griffs 22 eine entsprechend Einschuböffnung 4.1 auf.

Der Filterträger 3 stützt sich auf seiner Unterseite mit seiner unteren Filterträgerwand 21, die die untere Dichtungsfläche 21.2 bereitstellt, auf einer den Boden der Einschuböffnung 4.1 bildenden Abstützplatte 23 ab, die seitlich über das Gehäuse 4 übersteht und mit diesem verbunden ist. Die Abstützplatte 23 weist eine Aussparung in Form einer radial umlaufenden Nut 24 auf, in der eine Ringdichtung 25 angeordnet ist, die in der Öffnungsstellung der Brühvorrichtung 1 über die Abstützplatte 23 vorsteht. Die Abstützplatte 23 weist mittig einen Ablauf 26 mit einem nach unten gezogenen Spritzschutz 27 auf. Die Abstützplatte 23 weist zwischen dem Auflagebereich des Filterträgers 3 und dem Ablauf 26 ein Gefälle auf, das den sicheren Ablauf des aus der Brühkammer 18 kommenden Kaffees in den Auslauf 28 ermöglicht.

Der in seinem Mittelbereich rund zulaufende Auslauf 28 ist in einer Vertiefung der Abstützplatte 23 angeordnet, die durch den sich in axialer Richtung erstreckenden Ringabschnitt 29 der Abstützplatte 23 gebildet ist. Der Auslauf 28 leitet den Kaffee zu mindesten einer, üblicherweise zwei, hier nicht gezeigten, Auslauftülle(n).

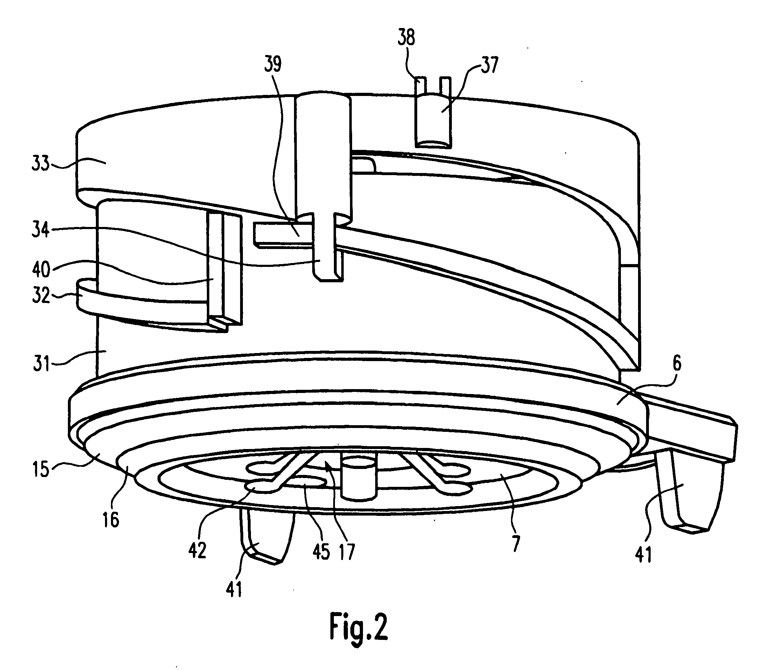

Um das obere Brühkammerteil 2 in axialer Richtung zu bewegen, ist das Abdeckteil 6 mit einem sich in axialer Richtung erstreckenden ringförmig ausgebildeten Aufdrückteil 31 verbunden. Am Außenumfang des Aufdrückteils 31 ist ein Führungssteg 32 ausgebildet, der sich wendelförmig um den Außenumfang des Aufdrückteils 31 erstreckt. Um den Außenumfang des Aufdrückteils 31 ist weiter das Betätigungsteil 33 platziert, das sich oberhalb des Führungsstegs 32 bis zur Oberkante des Gehäuses erstreckt. Das ebenfalls ringförmig ausgebildete Betätigungsteil 33 ist, wie in Fig. 2 deutlich erkennbar, rampenförmig ausgebildet, und ist drehbar um das Aufdrückteil 31 angeordnet. Durch einen Öffnungsschlitz 35 an der Stirnseite des Gehäuses 4 ist das Betätigungsteil 33 mit einem Handgriff 36 verbunden. Dabei wird der Handgriff 36 an dem Gewindestutzen 37 verschraubt, der koaxial an der Oberkante des Betätigungsteils 33 angeordnet ist und mit einem Führungsabschnitt 38 in den Öffnungsschlitz hineinragt. Das Betätigungsteil 33 weist weiter einen Haken 34 auf, der den Führungssteg 32 umgreift. Der Führungssteg 32 weist einen waagerechten Stegteil 39 auf, der in der in Fig. 2 gezeigten Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil 40 auf, der im unteren Ende des wendelförmigen Führungsstegs 32 angeordnet ist und als Anschlag der Hubeinrichtung für die Öffnungsstellung der Brühvorrichtung 1 dient. Am Abdeckteil 6 sind zwei Arretierzapfen 42 angeordnet, die in axialer Richtung nach unten über den Steg 16 der Druckplatte 7 vorstehen und in entsprechende Arretieröffnungen 43 des Filterträgers 3 eingreifen, um diesen in der Brühstellung zu positionieren und ein Herausziehen des Filterträgers 3 zu verhindern.

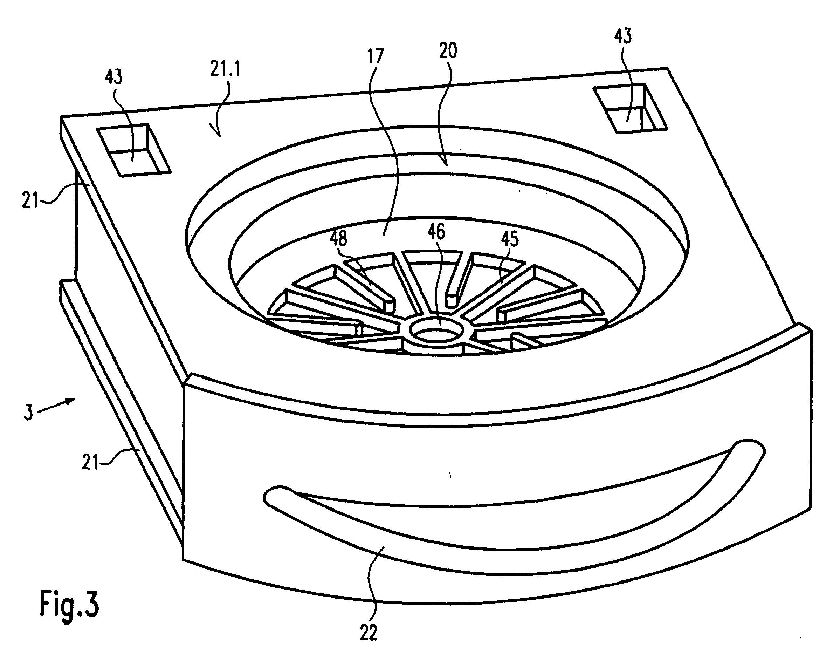

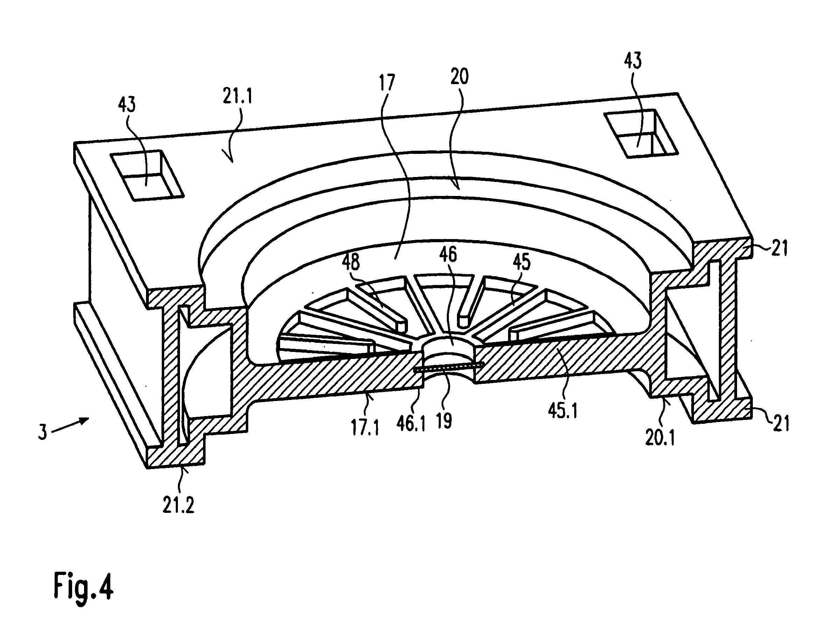

Die Rückseite des Filterträgers 3 ist ebenfalls mit einer als topfförmige Vertiefung ausgestalteten Aufnahme 17.1 versehen. Die Aufnahme 17.1 weist ebenfalls eine Randstufe 20.1 auf, die mit dem Aufdrücksteg, bei geeigneter Stellung, in Eingriff bringbar ist. Die Aufnahme 17.1 ist flacher ausgestaltet, als die Aufnahme 17 und dient zur Aufnahme eines einzigen, nicht näher dargestellten, mit gemahlenem Kaffee gefüllten Filterkissens (Filterpad). In der Aufnahme 17 können dagegen zwei Filterpads übereinander angeordnet werden. Der Filterträger kann von der in Fig. 1 dargestellten Einschubstellung nach dem Schubladenprinzip in eine Einlegestellung zum Einlegen des mindestens einen Filterpads herausgezogen werden. Selbstverständlich kann dies nur in der Öffnungsstellung der Brühkammer 18 erfolgen. Aus den Fig. 3 und 4 ist noch zu erkennen, dass der Boden 44 und 44.1 der Aufnahmen 17, 17.1 mit Auflagestegen 45, 45.1 versehen sind, die ein Aufquillen des daraufliegenden Filterpads beim Brühvorgang begünstigen. Hierzu ist auch der zentrale Auslass mit einem erhöhten Ringrand 46 bzw. 46.1 versehen, der die gleiche Höhe hat wie die Auflagestege 45 bzw. 45.1.

Der Vollständigkeit halber sei noch erwähnt, dass die Unterseite des Filterträgers 3 ebenfalls rechteckförmige Arretieröffnungen 43 aufweist.

Im Folgenden wird nunmehr die Wirkungs- und Funktionsweise der oben beschriebenen Brühvorrichtung 1 näher erläutert.

In der in Fig. 1 dargestellten geschlossenen Brühstellung sind üblicherweise in der Brühkammer 18 zwei aufeinander liegende Filterpads angeordnet. Ein umlaufender Versiegelungsrand des oberen Filterpads liegt dabei auf der Oberseite der Randstufe 20 auf und befindet sich demnach in der Brühstellung zwischen der Randstufe 20 und dem Aufdrücksteg 16. In dieser geschlossenen Brühstellung wird von einer nicht näher dargestellten Pumpe heißes Wasser über eine Anschlussleitung sowie den Wasseranschluss 8 dem Ventilteil 5 zugeführt. Durch den Druck des Wassers wird die Feder 14 mittels der Ventilkugel 13 zusammengedrückt, wobei die Ventilkugel 13 sich von ihrem Ventilsitz löst und einen Wasserzulauf zur Brühkammer 18 ermöglicht. Je nach Ausgestaltung der Düsenplatte 19 und der Pumpe kann in der gegenüber der Umgebung geschlossenen Brühkammer 18 bei einer in einer Niederdruckkaffeemaschine eingesetzten Brühvorrichtung 1 ein Brühdruck zwischen 1,2 bar und 2,0 bar, bevorzugt 1,5 bis 1,8 bar, aufgebaut werden. Die Kaffeepads werden zunächst durch das Wasser befeuchtet und im weiteren Verlauf von dem Brühwasser durchströmt, das an der Düsenplatte 19 aus der Brühkammer 18 austritt und über den Ablauf 26 und den Auslauf 28 aus der oder den Auslauftüllen aus der Brühvorrichtung 1 abgegeben wird. Die Abstützplatte 23 ist in dem Bereich unter der Brühkammer 18 zum Ablauf 26 hin geneigt, um einen sicheren und vollständigen Ablauf des Kaffees zu gewährleisten. Nach einem bestimmten, einstellbaren Zeitraum bzw. einer geförderten Wassermenge, wird die Pumpe wieder abgeschaltet und damit der Brühvorgang beendet.

Nach dem Ende des Brühvorgangs kann die Brühkammer 18 durch ein Rückschwenken des Handgriffs 36 wieder geöffnet werden. Beim Rückschwenken des Hangriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte Axialbewegung in Richtung der Öffnungsstellung über den Führungssteg 32 auf das Aufdrückteil 31 und damit auf das obere Brühkammerteil 2. Es wird demnach die Schwenkbewegung des Handgriffs 36 um die Achse A und der damit einhergehenden Drehbewegung des Betätigungsteils 33 ein axiales Anheben der Druckplatte 7 verursacht.

In der nicht dargestellten Öffnungsstellung sind die konisch ausgestalteten Arretierzapfen 42 aus den Arretieröffnungen 43 des Filterträgers 3 herausbewegt und geben diesen frei. Die Druckplatte 7 ist ebenfalls so weit nach oben bewegt, dass sich der Aufdrücksteg 16 oberhalb des unteren Randes der Einschuböffnung 4.1 befindet. In dieser Öffnungsstellung kann der Filterträger 3 zusammen mit den gebrauchten, durch das Brühwasser befeuchteten Kaffeepads mit Hilfe des Griffs 22 wie eine Schublade aus der Einschuböffnung 4.1 herausgezogen werden. Nach Entnahme der Kaffeepads aus der Aufnahme 17 kann der Filterträger 3 für einen weiteren Brühvorgang erneut mit Kaffeepads befüllt werden, oder ungefüllt in die Einschuböffnung 4.1 zurückgeschoben werden.

Soll aber im Folgenden eine einfache Kaffeeportion, z.B. mit einer anderen Kaffeesorte oder einem entkoffeinierten Kaffee, erzeugt werden, so kann der Filterträger 3 umgedreht werden, so dass die Aufnahme 17.1 nunmehr oben liegt. In die Aufnahme 17.1 wird dann ein einzelnes Kaffeepad eingelegt, so dass der Versiegelungsrand des Kaffeepads auf der Randstufe 20.1 aufliegt. Nunmehr wird der Filterträger 3 zurück in die Einschuböffnung 4.1 eingeschoben. Anschließend wird mit Hilfe des Handgriffs 36 das Betätigungsteil 33 bewegt, wodurch die Druckplatte 7 zusammen mit dem Aufdrückteil 31 nach unten bewegt wird, bis der Aufdrücksteg 16 auf den Versiegelungsrand und die Randstufe 20.1 aufdrückt. Gleichzeitig fahren die Arretierzapfen 42 in die Arretieröffnungen 43, die auch auf dieser Seite des Filterträgers 3 angeordnet sind, ein. Die konische Ausgestaltung der Arretierzapfen 42 sorgt dafür, dass auch bei nicht vollständig eingeschobenem Filterträger 3 die Arretierzapfen 42 dennoch in die Arretieröffnungen 43 eingreifen und beim Schließvorgang den Filterträger 3 in die richtige Lage ziehen bzw. drücken. Die Kraft, die durch die Betätigung des Handgriffes 36 und des Hubmechanismus aufgebracht wird, ist so groß, dass eine ausreichende Abdichtung der Brühkammer 18 durch Aufdrücken auf die Ringdichtungen 15 und 25 herbeigeführt ist.

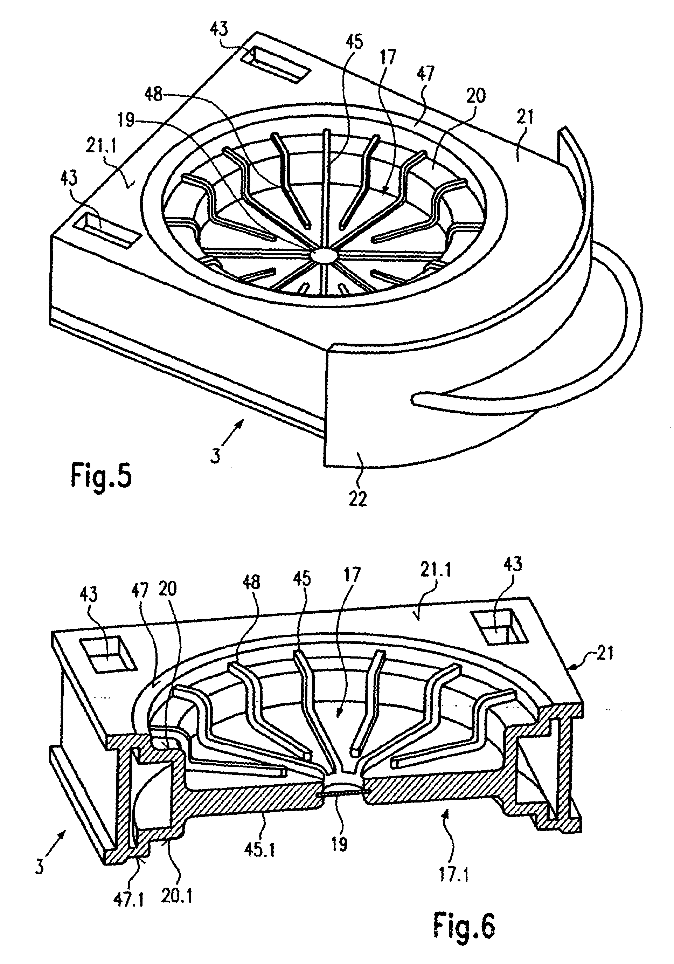

Im Folgenden wird anhand der Fig. 5 und 6 eine zweite Ausführungsform eines Filterträgers 3 näher erläutert. Es wird nur auf die wesentlichen Unterschiede eingegangen, weshalb im Hinblick auf die anderen Strukturen und Formgebungen unter Verwendung der gleichen Bezugsziffern auf das Vorangegangene verwiesen wird.

Der Filterträger 3 unterscheidet sich dadurch, dass er umlaufende Dichtungsvertiefungen 47, 47.1 aufweist. Diese Dichtungsvertiefungen 47, 47.1 gehören jedoch nicht zur Aufnahme 17, 17.1, da das Filterpad nicht mit den Dichtungsvertiefungen 47, 47.1 in Berührung kommt. Ein Randbereich des Filterpads liegt auf der Randstufe 20, 20.1 auf, während der dickere Teil des Filterpads in der restlichen Aufnahme 17, 17.1 platziert ist. Die Auflagestege 45 und 48 sowie auf der Unterseite die Auflagestege 45.1 und 48.1 (nicht näher dargestellt), erstrecken sich nicht nur am Boden der Aufnahmen 17, 17.1, sondern auch an deren Wandung bis auf den horizontalen Bereich der Randstufe 20, 20.1. Die Auflagestege 45, 45.1 verlaufen bis zur mittigen Öffnung mit der Düsenplatte 19. Das bedeutet, dass der Rand des Filterpads auch auf diesen Stegen 45, 45.1 und 48, 48.1 aufliegt und in Zusammenwirkung mit dem Aufdrücksteg 16 eine bessere Verkrallung erfolgt.

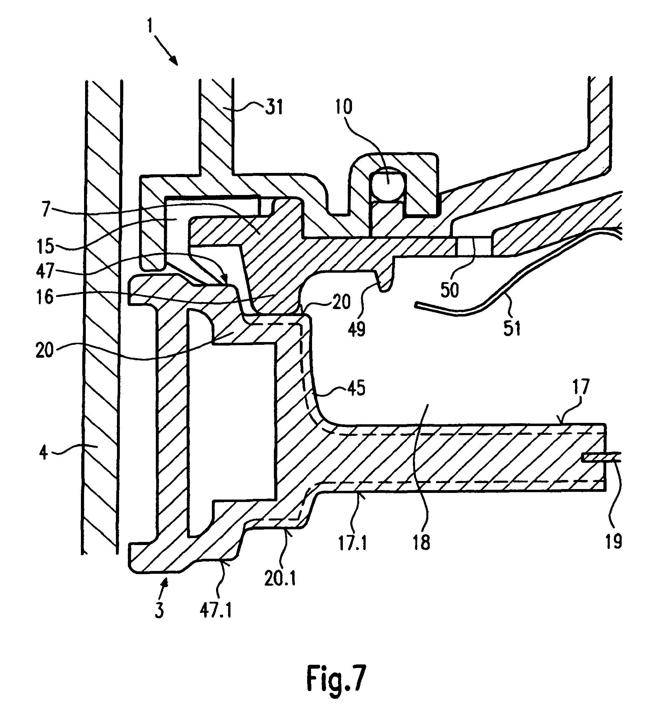

Ein solcher Filterträger 3 ist nunmehr in eine modifizierte Brühvorrichtung 1 gemäß der Fig. 7 eingesetzt. Hier wird ebenfalls nur auf die wesentlichen Unterschiede zu der zuvor beschriebenen Brühvorrichtung eingegangen. Aus diesem Grunde wird unter Verwendung der gleichen Bezugsziffern auf die obige Beschreibung verwiesen.

Hierbei weist die Druckplatte 7 einen nach innen vorstehenden, umlaufenden Kragen 49 auf, der in der Brühstellung leicht auf das obere Filterpad aufdrückt und dafür sorgt, dass heißes Wasser, das durch einen Einlasskanal 50 in die Brühkammer 18 einströmt, nicht an der Oberfläche des oberen Filterpads vorbei und in den Bereich der Randstufe 20 fließen kann. Bei dieser Ausführungsform ist auch eine Verteilerfeder 51 zu erkennen, die zum einen heißes Wasser, das aus dem Einlasskanal 50 einströmt, so verteilt, dass es bis zu dem Kragen 49 fließt, und zum anderen das Filterpad beim Öffnungsvorgang von der Druckplatte 7 abhebt. Im Gegensatz zu der in Fig. 7 dargestellten Stellung ist die Verteilerfeder 41 bei eingelegtem Filterpad nach oben hin eingefedert und ist daher näher an der Druckplatte 7 angeordnet. Damit die Ringdichtung 15 ordnungsgemäß funktioniert, ist ein Leckagestrom im Bereich der Randstufe 20, 20.1 unter den Aufdrücksteg 16 hindurch gewünscht, damit sich eine verstärkte Abdichtung ergibt.

Der Vollständigkeit halber sei angemerkt, dass die Auflagestege nicht die in diesem Ausführungsbeispiel gezeigte Formgebung aufweisen müssen. Vielmehr können diese auch einen größeren Raum einnehmen, als die dazwischen liegenden Vertiefungen, so dass eher von dazwischen liegenden Nuten gesprochen werden kann.

## Patentansprüche

1. Kaffeebrühvorrichtung (1) mit einer Brühkammer (18) bestehend aus einem oberen und einem unteren Teil, die zwischen einer Öffnungsstellung und einer geschlossenen Brühstellung relativ zueinander bewegbar ausgestaltet sind und mit einem vom unteren Teil der Brühkammer (18) umfassten Filterträger, wobei der Filterträger (3) als Wechselkassette ausgestaltet ist, die quer zur Brühkammerachse (A) zwischen einer Einlegestellung zum Einlegen oder Entfernen eines Filterpads und einer Einschubstellung bewegbar ausgestaltet ist, und sowohl eine erste Aufnahme (17) für eine erste Anzahl von Filterpads als auch eine zweite Aufnahme (17.1) für eine zweite Anzahl von Filterpads aufweist,
**dadurch gekennzeichnet, dass** der Filterträger (3) als Wendewechselkassette ausgestaltet ist, wobei die erste Aufnahme (17) an der Oberseite und die zweite Aufnahme (17.1) an der Unterseite des Filterträgers (3) angeordnet ist.

2. Vorrichtung nach Anspruch 1,
**dadurch gekennzeichnet, dass** das obere Teil (2) der Brühkammer einen in die Brühkammer hineinragenden und einen Brühkammereinlassbereich umgebenden Kragen (49) aufweist.

3. Vorrichtung (1) nach Anspruch 1 oder 2,
**dadurch gekennzeichnet, dass** der Filterträger (3) in eine zumindest einseitig offene Einschubaufnahme (4.1) eines Gehäuses (4) ein- und ausschiebbar ausgestaltet ist.

4. Vorrichtung (1) nach einem der Ansprüche 1 bis 3,
**dadurch gekennzeichnet, dass** eine erste und zweite Aufnahme (17,17.1) als topfförmige Vertiefungen ausgestaltet sind, die eine umlaufende Randstufe (20,20.1) aufweisen, und das obere Teil (2) der Brühkammer (18) einen stirnseitig angeordneten ringförmigen Aufdrücksteg (16) aufweist, der in der Brühstellung auf einen horizontalen Abschnitt der Randstufe (20,20.1) gedrückt ist.

5. Vorrichtung nach Anspruch 4,
**dadurch gekennzeichnet, dass** die erste und zweite Aufnahme (17,17.1) radial verlaufende Stege und/oder Nuten aufweisen, die sich bis zur umlaufenden Randstufe (20,20.1) fortsetzen, und in der Brühstellung der ringförmige Aufdrücksteg (16) auf den Randbereich des Filterpads gedrückt ist, der auf den Stegen und/oder Nuten der horizontalen Randstufe (20,20.1) aufliegt.

6. Vorrichtung (1) nach Anspruch 4 oder 5,
**dadurch gekennzeichnet, dass** am oberen Teil (2) der Brühkammer (18) eine obere Ringdichtung (15) angeordnet ist, die auf eine obere Dichtungsfläche (20.1) des Filterträgers (3) in der Brühstellung aufgedrückt ist.

7. Vorrichtung (1) nach Anspruch 6,
**dadurch gekennzeichnet, dass** in der Brühstellung das Einfedern der oberen Ringdichtung (15) durch das Aufdrücken des ringförmigen Aufdrückstegs (16) auf die umlaufende Randstufe (20,20.1) des Filterträgers (3) begrenzt ist.

8. Vorrichtung (1) nach einem der Ansprüche 3 bis 7,
**dadurch gekennzeichnet, dass** am Boden der Einschubaufnahme (4.1) eine untere Ringdichtung (25) vorgesehen ist, auf die eine untere Dichtungsfläche (20.2) des Filterträgers (3) in der Brühstellung aufgedrückt ist.

9. Vorrichtung (1) nach Anspruch 8,
**dadurch gekennzeichnet, dass** die untere Ringdichtung (25) in einer Aussparung (24) des Bodens der Einschubaufnahme (4.1) angeordnet ist und in der Offnungsstellung teilweise über den Boden übersteht und der Filterträger (3) in der Brühstellung mit dem Boden in Berührung steht und die untere Ringdichtung (25) an die untere Dichtungsfläche (21.2) des Filterträgers (3) angedrückt ist.

10. Vorrichtung (1) nach einem der vorangegangenen Ansprüche,
**dadurch gekennzeichnet, dass** der Filterträger (3) bei gleichzeitiger Einschub- und Brühstellung mittels an dem Filterträger (3) und dem oberen Teil (2) außerhalb der Brühkammer (18) ineinander greifender Positioniermittel arretiert ist, wobei die Positioniermittel in der Öffnungsstellung außer Eingriff gebracht sind.

11. Vorrichtung (1) nach Anspruch 10,
**dadurch gekennzeichnet, dass** die Positioniermittel von mindestens einem Arretierzapfen (42) und mindestens einer Arretieröffnung (43) gebildet sind.

12. Vorrichtung (1) nach Anspruch 11,
**dadurch gekennzeichnet, dass** der Arretierzapfen (42) sich zu seinem freien Ende hin verjüngend ausgestaltet ist.

13. Vorrichtung (1) nach Anspruch 11 oder 12,
**dadurch gekennzeichnet, dass** der mindestens eine Arretierzapfen (42) am oberen Teil (2) der Brühkammer (18) und die mindestens eine Arretieröffnung (43) am Filterträger (3) angeordnet sind.

14. Kaffeebrühvorrichtung (1) nach einem der Ansprüche 1 bis 13, mit zumindest einem in das untere Teil (3) der Brühkammer (18) eingelegten, mit gemahlenem Kaffee gefüllten Filterkissen (Filterpad).

15. Verwenden eines als Wendewechselkassette ausgestalteten Filterträgers (3) zur Aufnahme in eine zumindest einseitig offene Einschubaufnahme (4.1) eines Gehäuses (4) einer Kaffeebrühvorrichtung (1), wobei eine erste Aufnahme (17) an der Oberseite und eine zweite Aufnahme (17.1) an der Unterseite des Filterträgers (3) angeordnet ist, die erste Aufnahme (17) oder die zweite Aufnahme (17.1) in einer geschlossene Brühstellung einen unteren Teil einer Brühkammer (18) der Kaffeebrühvorrichtung (1) ausbilden, und die Wendewechselkassette quer zur Brühkammerachse (A) zwischen einer Einlegestellung zum Einlegen oder Entfernen eines Filterpads und einer Einschubstellung bewegbar ausgestaltet ist.

## Claims

1. Coffee brewing apparatus (1) having a brewing chamber (18) consisting of an upper and a lower part which are configured so as to be able to move relative to each other between an open position and a closed brewing position and having a filter carrier which is comprised by the lower part of the brewing chamber (18), the filter carrier (3) being configured as an exchangeable cartridge which is configured so as to be able to move transversely to the brewing chamber axis (A) between an insertion position for inserting or removing a filter pod and a pushed-in position and has both a first receptacle (17) for a first number of filter pods and a second receptacle (17.1) for a second number of filter pods,
**characterised in that** the filter carrier (3) is configured as a rotatable cartridge, the first receptacle (17) being arranged on the upper side and the second receptacle (17.1) on the underside of the filter carrier (3).

2. Apparatus according to claim 1,
**characterised in that** the upper part (2) of the brewing chamber has a collar (49) which protrudes into the brewing chamber and surrounds a brewing chamber inlet region.

3. Apparatus (1) according to either claim 1 or claim 2,
**characterised in that** the filter carrier (3) is configured so as to be able to be pushed into and out of a push-in receptacle (4.1), which is open on at least one side, of a housing (4).

4. Apparatus (1) according to any one of claims 1 to 3
**characterised in that** a first and a second receptacle (17, 17.1) are configured as pot-like depressions having a peripheral edge step (20, 20.1) and the upper part (2) of the brewing chamber (18) has an annular press-on web (16) which is arranged at the end face and is pressed in the brewing position onto a horizontal portion of the edge step (20, 20.1).

5. Apparatus according to claim 4,
**characterised in that** the first and the second receptacle (17, 17.1) have radially protruding webs and/or grooves which extend up to the peripheral edge step (20, 20.1) and, in the brewing position, the annular press-on web (16) is pressed onto the edge region of the filter pod that rests on the webs and/or grooves of the horizontal edge step (20, 20.1).

6. Apparatus (1) according to either claim 4 or claim 5,
**characterised in that** an upper ring seal (15), which is pressed onto an upper sealing face (20.1) of the filter carrier (3) in the brewing position, is arranged on the upper part (2) of the brewing chamber (18).

7. Apparatus (1) according to claim 6,
**characterised in that**, in the brewing position, the resilience of the upper ring seal (15) is limited by the pressing of the annular press-on web (16) onto the peripheral edge step (20, 20.1) of the filter carrier (3).

8. Apparatus (1) according to any one of claims 3 to 7,
**characterised in that** a lower ring seal (25), onto which a lower sealing face (20.2) of the filter carrier (3) is pressed in the brewing position, is provided at the base of the push-in receptacle (4.1).

9. Apparatus (1) according to claim 8,
**characterised in that** the lower ring seal (25) is arranged in a recess (24) in the base of the push-in receptacle (4.1) and, in the open position, protrudes partially beyond the base and the filter carrier (3), in the brewing position, is in contact with the base and the lower ring seal (25) is pressed against the lower sealing face (21.2) of the filter carrier (3).

10. Apparatus (1) according to any one of the preceding claims,
**characterised in that** the filter carrier (3) is locked, while in both the pushed-in and the brewing position, using positioning means which engage with one another on the filter carrier (3) and the upper part (2) outside the brewing chamber (18), the positioning means being disengaged in the open position.

11. Apparatus (1) according to claim 10,
**characterised in that** the positioning means are formed by at least one locking peg (42) and at least one locking opening (43).

12. Apparatus (1) according to claim 11,
**characterised in that** the locking peg (42) is configured so as to taper toward its free end.

13. Apparatus (1) according to either claim 11 or claim 12,
**characterised in that** the at least one locking peg (42) is arranged on the upper part (2) of the brewing chamber (18) and the at least one locking opening (43) is arranged on the filter carrier (3).

14. Coffee brewing apparatus (1) according to any one of claims 1 to 13, having at least one filter pod (filter pad) which is filled with ground coffee and inserted into the lower part (3) of the brewing chamber (18).

15. Use of a filter carrier (3) which is configured as an exchangeable cartridge for reception in a push-in receptacle (4.1), which is open on at least one side, of a housing (4) of a coffee brewing apparatus (1), wherein a first receptacle (17) is arranged on the upper side and a second receptacle (17.1) is arranged on the underside of the filter carrier (3), the first receptacle (17) or the second receptacle (17.1) forms, in a closed brewing position, a lower part of a brewing chamber (18) of the coffee brewing apparatus (1) and the rotatable cartridge is configured so as to be able to move transversely to the brewing chamber axis (A) between an insertion position for inserting or removing a filter pod and a pushed-in position.

## Revendications

1. Dispositif d'infusion de café (1) comprenant une chambre d'infusion (18) composée d'une partie supérieure et d'une partie inférieure qui sont conçues pour être mobiles l'une par rapport à l'autre entre une position ouverte et une position d'infusion fermée, et un porte-filtre compris dans la partie inférieure de la chambre d'infusion (18), le porte-filtre (3) étant conçu comme une cassette échangeable qui est mobile, transversalement par rapport à l'axe (A) de ladite chambre d'infusion, entre une position de chargement pour charger ou enlever un sachet-filtre et une position rentrée, et qui présente à la fois un premier logement (17) pour une première quantité de sachets, et un second logement (17.1) pour une seconde quantité de sachets,
**caractérisé en ce que** le porte-filtre (3) est conçu comme une cassette réversible, le premier logement (17) étant disposé sur le côté supérieur du porte-filtre (3) et le second logement (17.1) sur le côté inférieur de celui-ci.

2. Dispositif selon la revendication 1, **caractérisé en ce que** la partie supérieure (2) de la chambre d'infusion présente une collerette (49) qui entre dans la chambre d'infusion et qui entoure une zone d'entrée de celle-ci.

3. Dispositif (1) selon la revendication 1 ou 2, **caractérisé en ce que** le support de filtre (3) est conçu pour pouvoir coulisser pour entrer dans un logement d'entrée (4.1), ouvert au moins sur un côté, d'un boîtier (4) et pour en sortir.

4. Dispositif (1) selon l'une des revendications 1 à 3, **caractérisé en ce que** des premier et second logements (17, 17.1) sont conçus comme des creux en forme de godets qui présentent un rebord circulaire (20, 20.1), et la partie supérieure (2) de la chambre d'infusion (18) présente un talon d'appui annulaire (16), disposé côté frontal, qui est pressé sur une partie horizontale du rebord (20, 20.1), dans la position d'infusion.

5. Dispositif selon la revendication 4, **caractérisé en ce que** les premier et second logements (17, 17.1) présentent des nervures et/ou des rainures radiales qui se prolongent jusqu'au rebord circulaire (20, 20.1), et dans la position d'infusion le talon d'appui annulaire (16) est pressé sur la zone du bord du sachet-filtre qui est posée sur lesdites nervures et/ou rainures du rebord horizontal (20, 20.1).

6. Dispositif (1) selon la revendication 4 ou 5, **caractérisé en ce qu'**il est prévu sur la partie supérieure (2) de la chambre d'infusion (18) un joint d'étanchéité annulaire supérieur (15) qui est pressé sur une surface d'étanchéité supérieure (20.1) du porte-filtre (3), dans la position d'infusion.

7. Dispositif (1) selon la revendication 6, **caractérisé en ce que** dans la position d'infusion, la compression élastique du joint d'étanchéité annulaire supérieur (15) est limitée par la pression du talon d'appui annulaire (16) sur le rebord circulaire (20, 20.1) du porte-filtre (3).

8. Dispositif (1) selon l'une des revendications 3 à 7, **caractérisé en ce qu'**il est prévu au fond du logement d'entrée (4.1) un joint d'étanchéité annulaire inférieur (25) sur lequel est pressée une surface d'étanchéité inférieure (20.2) du porte-filtre (3), dans la position d'infusion.

9. Dispositif (1) selon la revendication 8, **caractérisé en ce que** le joint d'étanchéité inférieur (25) est disposé dans un creux (24) du fond du logement d'entrée (4.1) et, dans la position ouverte, dépasse en partie du fond, et dans la position d'infusion le porte-filtre (3) est en contact avec le fond et le joint inférieur (25) est pressé contre la surface d'étanchéité inférieure (21.2) du porte-filtre (3).

10. Dispositif (1) selon l'une des revendications précédentes, **caractérisé en ce que** le porte-filtre (3), quand il est en même temps dans la position rentrée et dans la position d'infusion, est arrêté à l'aide de moyens de positionnement qui s'interpénètrent au niveau du porte-filtre (3) et de la partie supérieure (2), à l'extérieur de la chambre d'infusion (18), les moyens de positionnement étant désolidarisés dans la position ouverte.

11. Dispositif (1) selon la revendication 10, **caractérisé en ce que** les moyens de positionnement sont formés par au moins une tige d'arrêt (42) et au moins une ouverture d'arrêt (43).

12. Dispositif (1) selon la revendication 11, **caractérisé en ce que** la tige d'arrêt (42) va en rétrécissant vers son extrémité libre.

13. Dispositif (1) selon la revendication 11 ou 12, **caractérisé en ce que** la ou les tiges d'arrêt (42) sont disposées sur la partie supérieure (2) de la chambre d'infusion (18) et la ou les ouvertures d'arrêt (43) sont disposées sur le porte-filtre (3).

14. Dispositif d'infusion de café (1) selon l'une des revendications 1 à 13, avec au moins une dosette-filtre (sachet-filtre) qui est remplie de café moulu et qui est placée dans la partie inférieure (3) de la chambre d'infusion (18).

15. Utilisation d'un porte-filtre (3) conçu comme une cassette réversible à loger dans un logement d'entrée (4.1), ouvert au moins sur un côté, d'un boîtier (4) d'un dispositif d'infusion de café (1), un premier logement (17) étant disposé sur le côté supérieur du porte-filtre (3) et un second logement (17.1) sur le côté inférieur de celui-ci, le premier (17) ou le second logement (17.1) formant dans une position d'infusion fermée une partie inférieure d'une chambre d'infusion (18) du dispositif d'infusion de café (1), et la cassette réversible étant conçue pour être mobile, transversalement par rapport à l'axe (A) de la chambre d'infusion, entre une position de chargement pour charger ou enlever un sachet-filtre, et une position rentrée.
